# EUROPEAN PATENT APPLICATION

(11) **EP 4 738 035 A1**
(43) Date of publication of application: **06.05.2026**
(21) Application number: 25209502.1
(22) Date of filing: 17.10.2025
(51) Int. Cl.: G05B 19/418

(54) **RF TRANSCEIVERS CONNECTIVITY ENABLING SMART MOVERS MONITORING IN MANUFACTURING LINES**

(30) Priority: 30.10.2024 US 202418931548
(71) Applicant: STMicroelectronics International N.V., 1228 Plan-les-Ouates, Geneva (CH)
(72) Inventor: PULEO, Salvatore Maria, 90011 BAGHERIA (IT); LA ROSA, Fabrizio, 95030 SAN PIETRO CLARENZA (IT); BRANCIFORTE, Marco Maria, 95128 CATANIA (IT); DI PIETRO, Alessandra, 95100 CATANIA (IT); ABBATE, Nunzio, 95129 CATANIA (IT)
(74) Representative: Cabinet Beaumont

(57) **Abstract**

Systems, apparatuses, and methods for manufacturing lines are provided, particularly to monitoring the status of a manufacturing line using smart movers with RF transceivers. A mover for a manufacturing line may include at least one sensor configured to generate sensor data and a mover RF transceiver configured to transmit a mover signal associated with the sensor data to an anchor RF transceiver of a first anchor point of a plurality of anchor points. The mover is configured to move along a track of a manufacturing line. The mover may carry a load along the manufacturing line from one station to another. Multiple anchor points are arranged along the track. As the mover moves along the track, the mover pairs with an anchor point and transmits one or more mover signals to the anchor points. The mover signals include data about mover health or mover load health.

## Description

### TECHNOLOGICAL FIELD

Example embodiments of the present disclosure relate generally to manufacturing lines, particularly to monitoring the status of a manufacturing line using smart movers with RF transceivers.

### BACKGROUND

Manufacturing lines may use movers or shuttle conveyors to move loads along the manufacturing line between multiple stations. A mover of a platform that moves around or along a track. Conventional monitoring of the status of the manufacturing line and manufacturing processes may occur at specific phases or stops where a mover stops at a manufacturing station where an operation occurs on a mover load, such as a manufactured object or manufactured device. Such conventional monitoring, however, fails to monitor the status and health of a mover during transit or movement of the mover along the track between manufacturing stations. The lack of continuous monitoring leads to unobserved issues, such as vibrations and temperature changes, when a manufacturing line system has no information about the mover or the load(s) carried by the mover, such as position, temperature, health status, and other data which could be fundamental to prevent damages, downtimes, and/or to make smarter and more autonomous the overall system.

Conventional systems may also use wired sensors placed aside of the lines to avoid limiting the movement of the movers.

Conventional manufacturing lines may utilize wireless connectivity via Internet of Things (IoT) nodes, Bluetooth, and/or Wi-Fi connectivity. But such conventional manufacturing lines using these types of communication are required to utilize multiple gateways and complex network infrastructure to support such connectivity, which introduces latency in pairing and transmitting signals from a mover to a gateway of a monitoring system. Additionally, such network infrastructure is burdensome and costly to set up and maintain.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY

Various embodiments described herein relate to systems, apparatuses, and methods for manufacturing lines, particularly to monitoring the status of a manufacturing line using smart movers with RF transceivers. As described herein, a smart mover may allow for direct communication, such as communicating data from or associated with one or more sensors on the mover.

In accordance with some embodiments of the present disclosure, an example mover for a manufacturing line is provided. The mover for the manufacturing line comprises: at least one sensor configured to generate sensor data; a mover RF transceiver configured to transmit a first mover signal associated with the sensor data to a first anchor RF transceiver of a first anchor point of a plurality of anchor points; and wherein the mover is configured to move along a track of a manufacturing line.

In some embodiments, the mover further comprises a controller configured to control communication between the mover RF transceiver and the at least one sensor.

In some embodiments, the mover RF transceiver is configured to communicate at a radio frequency between 40 GHz and 75 GHz with wavelengths between 7.5 millimeters and 4 millimeters.

In some embodiments, the first mover signal is configured to be 2 milliseconds or less.

In some embodiments, the first mover signal includes raw data generated by a sensor or includes mover health data or mover load health data generated based on raw data generated by a sensor.

In some embodiments, the mover is further configured to receive, from the first anchor RF transceiver, a first acknowledgement signal transmitted in response to the first mover signal.

In some embodiments, the first mover signal includes an alert signal associated with the sensor data exceeding a first threshold.

In accordance with some embodiments of the present disclosure, an example manufacturing line system is provided. The manufacturing line system comprises: a track; a plurality of anchor points located along the track, wherein each anchor point comprises an anchor RF transceiver; at least one mover configured to move along the track, wherein each mover comprises: at least one sensor configured to generate sensor data; a mover RF transceiver configured to transmit a first mover signal associated with the sensor data to a first anchor RF transceiver of a first anchor point of the plurality of anchor points.

In some embodiments, each mover further comprises a controller configured to control communication between the mover RF transceiver and the at least one sensor.

In some embodiments, each anchor RF transceiver and each mover RF transceiver are configured to communicate at a radio frequency between 40 GHz and 75 GHz with wavelengths between 7.5 millimeters and 4 millimeters.

In some embodiments, the first mover signal is configured to be 2 milliseconds or less.

In some embodiments, the first mover signal includes raw data generated by a sensor or includes mover health data or mover load health data generated based on raw data generated by a sensor.

In some embodiments, the mover is further configured to receive, from the first anchor RF transceiver, a first acknowledgement signal transmitted in response to the first mover signal.

In some embodiments, the first mover signal includes an alert signal associated with the sensor data exceeding a first threshold.

In accordance with some embodiments of the present disclosure, an example method is provided. The method comprises: moving, by a mover, along a track of a manufacturing line towards a first anchor point, wherein the mover comprises at least one sensor and a mover RF transceiver; and transmitting, by the mover RF transceiver of the mover to a first anchor RF transceiver of the first anchor point, a first mover signal associated with sensor data generated by the at least one sensor.

In some embodiments, the mover further comprises a controller configured to control communication between the mover RF transceiver and the at least one sensor.

In some embodiments, the transmitting of the first mover signal is at a radio frequency between 40 GHz and 75 GHz with wavelengths between 7.5 millimeters and 4 millimeters.

In some embodiments, the first mover signal is 2 milliseconds or less.

In some embodiments, the first mover signal includes raw data generated by a sensor or includes mover health data or mover load health data generated based on raw data generated by a sensor.

In some embodiments, the method includes receiving, by mover RF transceiver and from the first anchor RF transceiver, a first acknowledgement signal transmitted by the first anchor point in response to the first mover signal.

The above summary is provided merely for purposes of summarizing some example embodiments to provide a basic understanding of some aspects of the disclosure. Accordingly, it will be appreciated that the above-described embodiments are merely examples and should not be construed to narrow the scope or spirit of the disclosure in any way. It will also be appreciated that the scope of the disclosure encompasses many potential embodiments in addition to those here summarized, some of which will be further described below.

### BRIEF DESCRIPTION OF THE DRAWINGS

Having thus described certain example embodiments of the present disclosure in general terms, reference will now be made to the accompanying drawings, which are not necessarily drawn to scale, and wherein:
FIG. 1 illustrates an exemplary system with a mover in accordance with one or more embodiments of the present disclosure;
FIG. 2 illustrates example block diagrams of an anchor point and of a mover in accordance with one or more embodiments of the present disclosure;
FIG. 3 illustrates an example block diagram of an anchor point communicating with multiple movers in accordance with one or more embodiments of the present disclosure;
FIG. 4 illustrates a flowchart of an example method of operating a mover in accordance with one or more embodiments of the present disclosure;
FIGS. 5A-5D illustrate flowcharts of example methods of communicating in accordance with one or more embodiments of the present disclosure; and
FIG. 6 illustrates an example block diagram of circuitry of a device in accordance with one or more embodiments of the present disclosure.

### DETAILED DESCRIPTION

Some embodiments of the present disclosure will now be described more fully herein with reference to the accompanying drawings, in which some, but not all, embodiments of the disclosure are shown. Indeed, various embodiments of the disclosure are embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature is optionally included in some embodiments or is excluded.

The use of the term "circuitry" as used herein with respect to components of a system or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communications circuitry, input/output circuitry, and the like. In some embodiments, other elements may provide or supplement the functionality of particular circuitry.

### Overview

Various embodiments described herein relate to systems, apparatuses, and methods for manufacturing lines, particularly to monitoring the status of a manufacturing line using smart movers with RF transceivers. As described herein, a smart mover or mover may allow for communication about what a mover is experiencing as it moves along a track, such as communicating data from or associated with one or more sensors on the mover. Various embodiments utilize radiofrequency (RF) transceivers enabling smart movers connectivity in manufacturing lines.

The present disclosure provides a manufacturing line system with movers that move along a track. A mover may carry a load along the track. The mover may move a load to one or more stations. Each station may allow for one or more manufacturing processes to be performed on the load of a mover. The movers communicate with multiple anchor points placed along the track. The communication allows for transmission of data associated with the mover or the mover's load to the manufacturing line system. A mover may communicate with an anchor point without slowing down or stopping. In various embodiments, the communication allows for continuous monitoring of the mover or the load carried by the mover, such as position, temperature, health status, and other data that allows for preventing damage, downtime(s), and/or to make a smarter and more autonomous system.

Each mover may, for example, include one or more sensors that may generate sensor data associated with the mover and/or load on the mover. The data generated by the sensor is communicated to the anchor point. Alternatively or additionally, the mover may generate one or more alerts or alarms based on the sensor data and communicate one or more alerts and/or alarms.

A mover may utilize a mover RF millimeter-wave transceiver to transmit a mover signal. An anchor point may utilize an anchor RF millimeter-wave transceiver to receive the mover signal. The anchor point may also utilize the anchor RF millimeter-wave transceiver to transmit an acknowledgement signal to the mover. The acknowledgment signal is optionally based on a verification that the data received by the anchor point is correct or not corrupted. The data communicated may include or be associated with the status of the mover and/or load on the mover. Additionally or alternatively, the data communicated may include or be associated with one or more warnings associated with the status of mover and/or load on the mover, such as with a fault. These communications using RF millimeter-wave transceivers provide for communication of one or more signals within milliseconds. An example of an RF millimeter-wave transceiver is the ST60 RF Transceiver by STMicroelectronics.

The communication via the RF millimeter-transceivers allows for direct communication movers and a manufacturing line system without requiring a communications network with multiple intermediary gateways or the like, which allows for faster communication speeds. Various embodiments optionally include gateways to further communicate with other portions or components of manufacturing line system.

A mover may include one or more sensors that generate sensor data. In various embodiments, a sensor may generate sensor alerts or alarms such as when one or more thresholds are crossed or ranges are exceeded. Alternatively or additionally, a mover processes sensor data using machine learning or an algorithm (e.g., RMS, FFT). The mover generates one or more alerts or alarms based on the sensor data. Exemplary sensors may include accelerometer, gyroscope, magnetometer, temperature, and the like. For example, various embodiments may include one or more accelerometer, which may detect vibrations or bumps in the mover. These vibrations may be indicative of the manufacturing line system and/or a mover needing maintenance. In various embodiments, the vibration data from the sensor is transmitted via the RF mm-wave transceiver on the mover. Similarly, temperature sensors may allow for the transmission of temperature data. In various embodiments, two or more sensors may generate sensor data to monitor a mover or a load. For example, a pressure sensor may operate in conjunction with a temperature sensor by monitoring pressure sensor data in view of a temperature generated by the temperature sensor to monitor one or more operations (e.g., an oven operation) on a load (e.g., a material) carried by a mover.

The anchor point(s) may receive the mover signal and provide data in the mover signal from a mover with a manufacturing line system, such with one or more computing devices or the like that may operate the manufacturing line system. The manufacturing line system may utilize the data to monitor an operating status of the manufacturing line and, if needed, to stop the manufacturing line or schedule one or more maintenance operations.

Embodiments of the present disclosure allow for increased efficiency, reduced downtime, and increased productivity of the manufacturing line system. The RF mm-wave transceivers provide for high speed connection and throughput. For example, various embodiments may communicate data (e.g., hundreds of bytes) from a mover to an anchor point in milliseconds. Various embodiments may communicate data from a mover to an anchor point in 2 milliseconds. In various embodiments, the movers are configured for speeds of up to 14-15 km/h and do not need to slow down while or during transmitting and/or receiving signals. Various embodiments are configured for movers to move at higher speeds (e.g., 20 km/h or higher). Various embodiments provide for an exchange of data that is bidirectional. Alternatively, or with some locations, the data is transmitted unidirectionally. In various embodiments, the firmware of a mover is configured for one or more communication methods described herein, such as utilizing an acknowledgement signal.

The present disclosure includes various embodiments directed to multiple different applications. For example, embodiments of the present disclosure allow for tracking the movement of loads and monitoring the health of the mover and/or the load optionally include applications in logistics, warehousing, retail and distribution, healthcare and pharmaceuticals, automotive, aerospace, food and beverage, and e-commerce.

Various embodiments for logistics and/or warehousing applications allow for monitoring packages as a package moves through a warehouse. Various embodiments include package handling. In these various embodiments, smart movers described herein ensure that packages are efficiently routed to the correct locations. This may reduce errors and improve efficiency. Various embodiments include automated sorting systems. In these various embodiments, smart movers described herein are used in automated sorting systems to track and manage the movement of loads (e.g., items, packages, etc.) through one or more sorting stages. This may ensure accurate delivery and handling.

Various embodiments for retail and distribution applications allow for monitoring goods in fulfillment centers to track and manage the movement of goods, such as from storage to packaging and shipping areas. Various embodiments include fulfillment centers, such as automated fulfillment centers. In these various embodiments, smart movers described herein track and manage the movement of goods. Various embodiments include inventory management. In these various embodiments, smart movers described herein are used in inventory management systems to provide real-time inventory tracking. This may ensure items are correctly stocked and easily located.

Various embodiments for healthcare and/or pharmaceuticals applications allow for monitoring loads in, for example, a hospital supply chain and/or pharmaceutical manufacturing system. Various embodiments include a hospital supply chain. In these various embodiments, smart movers described herein manage the movement of loads (e.g., medical supplies, equipment, medications, etc.) within a hospital facility. This may ensure the loads are tracked and available when needed. Various embodiments include pharmaceutical manufacturing. In these various embodiments, smart movers described herein are used to monitor and manage the movement of raw materials and finished products. This may ensure compliance with regulatory standards.

Various embodiments for automotive and/or aerospace applications use smart movers as described herein for monitoring and managing movement of parts and/or assemblies along production lines and/or quality control stages. This may ensure loads of parts and/or assemblies are correctly processed and assembled. Additionally or alternatively, this may ensure that each item meets required standards before moving to a next stage or station.

Various embodiments for food and/or beverage industry applications allow for smart movers described herein for monitoring and managing movement of loads (e.g., ingredients, finished products, etc.) along production lines, from production facilities to distribution centers and/or retail outlets. This may ensure loads are correctly processed and packaged. Additionally or alternatively, this may ensure timely deliveries and reducing spoilage.

Various embodiments for e-commerce and/or online retail applications allow for monitoring and managing movement of loads (e.g., products, packages, etc.). In various e-commerce application embodiments, such as order fulfillment, smart movers described herein are to move loads from storage to packaging and shipping areas. This may ensure orders are fulfilled accurately and efficiently. In various e-commerce application embodiments, such as returns processing, smart movers described herein are used to monitor and manage loads of returned items. This may ensure returns are correctly processed and restocked or disposed of as needed.

### Exemplary Systems, Apparatuses, and Methods

Embodiments of the present disclosure herein include systems, apparatuses, and methods for RF transceivers enabling smart movers connectivity in manufacturing lines. The embodiments described herein may be implemented in various embodiments.

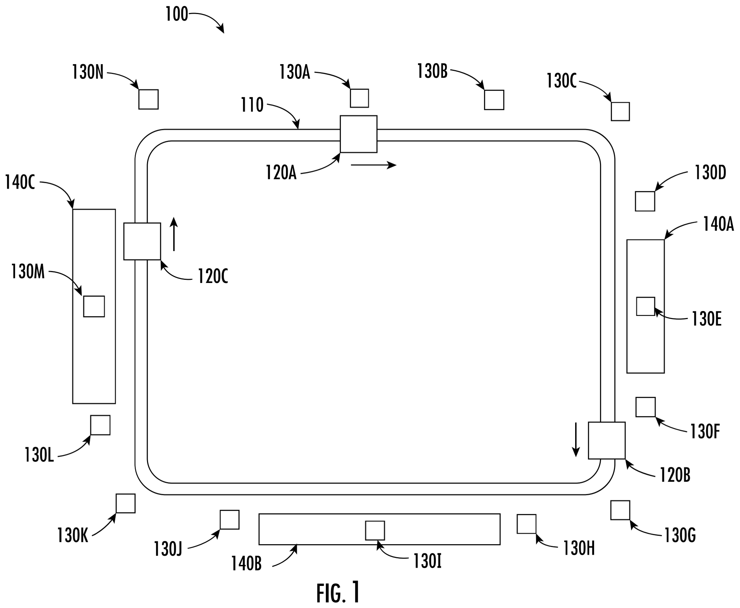

FIG. 1 illustrates an exemplary system with a mover in accordance with one or more embodiments of the present disclosure. A manufacturing line system 100 may include a track 110. A plurality of movers 120 (e.g., 120A, 120B, and 120C) move along the track 110. FIG. 1 illustrates the movers 120 moving in a clockwise direction (e.g., as illustrated by the arrows adjacent to each mover 120). The manufacturing line system 100 includes a plurality of anchor points 130 (e.g., 130A to 130N). The anchor points 130 are located along and adjacent to the track. In various embodiments, one or more anchor points are located in the track 110. One or more workstations 140 are located along the track 110. A workstation is where one or more manufacturing operations are performed on a load carried or transported by a mover 120. A workstation 140 (e.g., 140A) may include an anchor point 130 (e.g., 130E).

The track 110, in various embodiments, is made of a plurality of segments. A mover 120 may move along the segment. The segments are rearranged to change the shape of the track 110. It will be appreciated that while the track 110 is generally illustrated with a square shape that the present disclosure contemplates other shapes.

The movers 120 (e.g., 120A, 120B, and 120C) move along the track 110 of the manufacturing line system 100. In various embodiments, a mover may include one or more sensors and is referred to as a smart mover, a sensorized mover, or a sensor platform. The sensors may allow for monitoring mover health and/or monitor load health. Each mover 120 of the system may include a mover RF transceiver that communicates with the plurality of anchor points 130 (e.g., 130A to 130N), which each contain an anchor RF transceiver. In various embodiments, this communication exchanges one or more signals including or associated with data generated by one or more of the sensors.

As a mover 120A moves clockwise around the track 110, mover 120A will communicate sequentially with each of anchor point 130A, anchor point 130B, anchor point 130C, anchor point 130D, anchor point 130E, anchor point 130F, anchor point 130G, anchor point 130H, anchor point 130I, anchor point 130J, anchor point 130K, anchor point 130L, anchor point 130M, and anchor point 130N. As the mover 120A moves close to an anchor point 130, the mover 120A connects with the anchor point 130 by pairing with the anchor point 130 to open a channel to communicate and then transmitting with the anchor point 130, which is describing further herein. It will be appreciated that while mover 120A is described as moving clockwise, various embodiments include a mover 120A moving anti-clockwise or counter-clockwise.

In various embodiments, the anchor points 130 are located along the track 110 to allow for continuous or nearly continuous coverage of a mover 120 while a mover 120 moves along the track 110. This may allow for a mover 120 to be continuously communicating with the manufacturing line system 100. In various embodiments, the anchor points are arranged to communicate with a mover only over one or more portions of the track 110.

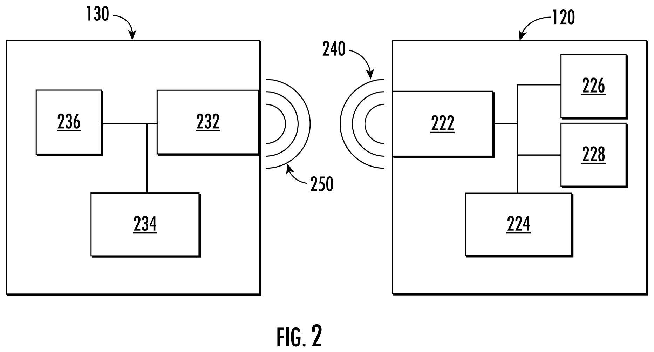

FIG. 2 illustrates example block diagrams of an anchor point and of a mover in accordance with one or more embodiments of the present disclosure. In various embodiments, a mover 120 includes a mover RF transceiver 222, a mover processor 224, mover input/output circuitry 226, and/or mover sensor circuitry 228. In various embodiments, the mover processor 224 is part of a mover controller. The mover RF transceiver is a mm-wave transceiver that is mounted on or integrated into the mover 120. In various embodiments, an anchor point 130 includes an anchor RF transceiver 232, an anchor processor 234, and/or anchor input/output circuitry 236. In various embodiments, the anchor processor 224 is part of an anchor controller. The anchor RF transceiver is a mm-wave transceiver that is mounted on or integrated into an anchor point 130.

In various embodiments, the mover RF transceiver 222 and the anchor RF transceiver 232 are configured to communicate via signals transmitted at frequencies with millimeter-wavelengths (mm-wave). For example, various embodiments include the mover RF transceiver configured to communicate at a radio frequency between 40 GHz and 75 GHz with wavelengths between 7.5 millimeters and 4 millimeters. The mover RF transceiver 222 may transmit mover signals 240. The anchor RF transceiver 232 may transmit anchor signals 250.

In various embodiments, a mover 120 may include sensor circuitry 228 that includes one or more sensors. For example, sensors include environmental sensors, such as, temperature sensors, humidity sensors, motions sensors (e.g., gyroscopes, accelerometers), etc. The sensors may optionally include MEMS sensors. In various embodiments, the sensors are used to acquire, for example, health measurements about the mover 120 and/or the load carried by the mover 120. In various embodiments, a sensor is located on the mover 120 and connected to the mover 120 via input/output circuitry 226, which may utilize, for example, a I2C, I3C, SPI, and/or general purpose input/output pins (GPIOs). The manufacturing line system 100 may utilize the sensor data associated with position measurements and/or the sensor data associated with health measurements to identify where and what type of environmental issues a mover 120 or load is experiencing. In various embodiments, a mover position is obtained in association with a connection and/or communication with an anchor. For example, a mover 120A pairs with an anchor point 130A will identify that the position of mover 120A corresponds to a position of anchor point 130A. In such embodiments, the anchor points 130 perform verification checks to identify locations of the mover 120.

A sensor may generate sensor data and may generate an alarm and/or alert when the sensor data exceeds one or more thresholds. For example, a vibration sensor may generate vibration sensor data and/or it may generate an alarm or alert when vibrations sensed exceed one or more thresholds. In various embodiments, a mover 120 may process vibration data to monitor a state of health a mover 120, the load of a mover 120, and/or an anchor point 130 by, for example, identifying acceleration peak(s), transforming vibration data with a Fast Fourier Transform (FFT), and/or applying machine learning. In another example, a temperature sensor may generate temperature sensor data and/or it may generate an alarm or alert when a temperature sensed exceeds or falls below one or more thresholds. As such, one or more ranges are monitored. In various embodiments, a mover 120 may determine or calculate its speed from one or more sensors, such as a gyroscope or accelerometers, alternatively, an anchor 130 may determine or calculate the speed of a mover 120 (e.g., utilizing a distance between two anchor points 130 and a time between connecting or communicating with the two anchor points 130). In various embodiments, sensor data is processed by the mover processor 224, which may generate an alarm and/or alert. A mover may transmit data or alerts or alarms. In various embodiments, multiple data, alerts, or alarms are included in one transmission. In various embodiments, a signal generated by a mover 120 (e.g., a mover signal) includes raw data generated by a sensor or includes mover health data or mover load health data generated by the mover 120 based on raw data generated by a sensor. In various embodiments, a mover 120 includes a controller configured to control communication between the mover RF transceiver 222 and the sensor(s) of a mover 120.

As a mover 120 moves in range of an anchor point 130, the mover 120 and the anchor point 130 may communicate. This may allow for real-time tracking of the position and health of the mover 120 and/or the load of the mover 120.

A mover 120 may include firmware and/or a register. The firmware and/or register are configured for different installations and/or applications. In various embodiments, firmware and/or a register are configured for RF communication setup, pairing, and/or management. For example, the firmware and/or registers are configured for pairing with the anchor points 130 along the track 110. This may increase the speed of pairing and maintaining an open channel as long as possible. For example, a register may utilize a state machine or the like to configuring one or more operations to occur as states are changed as the mover 120 moves along the track 110. In various embodiments, firmware and/or a register is configured for a specific sensor for data acquisition for the sensor and/or processing or performing an operation associated with the sensor data the sensor generates.

In various embodiments, a mover 120 and an anchor point 130 may communicate when there is a direct line-of-sight between the mover RF transceiver 222 and the anchor RF transceiver 232. For example, they may communicate when the mover RF transceiver 222 and the anchor RF transceiver 232 are generally in a face-to-face orientation.

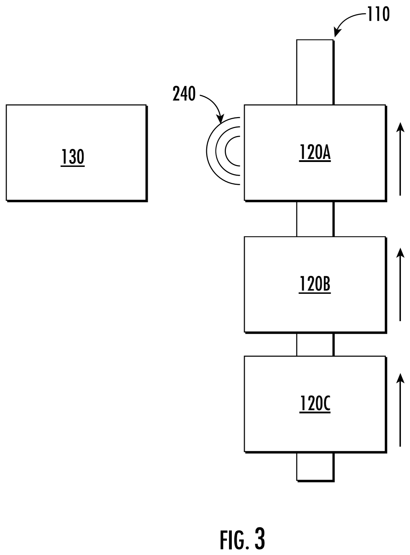

FIG. 3 illustrates an example block diagram of an anchor point communicating with multiple movers in accordance with one or more embodiments of the present disclosure. As each mover 120A, 120B, and 120C move along track 110 and by anchor point 130, each mover 120 pairs with the anchor point 130 to open a communication channel and communicate with the anchor point 130.

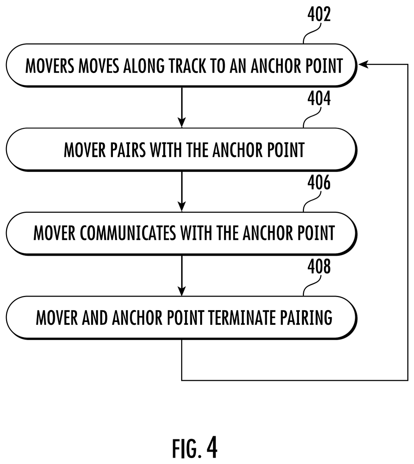

FIG. 4 illustrates a flowchart of an example method of operating a mover in accordance with one or more embodiments of the present disclosure. A manufacturing line system 100 includes multiple movers 120 and multiple anchor points 130 along a track 110. While one or more operations describe one mover 120, it will be appreciated that each mover 120 of the manufacturing line system 100 may perform one or more operations as each mover 120 moves within communication range of the anchor points 130. The operations may allow for real-time monitoring of movers 120 and/or mover loads as the movers 120 move along the track 110 through the manufacturing line system 100. The monitoring may allow for the exchange of data between the mover 120 and the anchor points 130 while the movers 120 move at speed.

At operation 402, a mover 120 moves along the track 110 to an anchor point 130. In various embodiments, the mover 120 moves along track 110 of the manufacturing line. As the mover 120 moves along the track 110, the mover travels into range of a first or next anchor point 130. In various embodiments, the mover 120 may continue moving along the track 110 during one or more additional operations.

At operation 404, the mover 120 pairs with the anchor point 130. Once the mover 120 moves into transmission range of the anchor point 130, the mover 120 pairs with the anchor point 130 to open a communication channel. The mover RF transceiver 222 of the mover 120 pairs with the anchor RF transceiver 232 of the anchor point 130. As the mover 120 moves to travel the track 110, it may broadcast one or more mover signals 240. Once in range of an anchor point 130, the anchor RF transceiver 232 may receive the mover signals 240 and respond by generating and transmitting an anchor signals 250 in response. This may include one or more data packets of data that opens a communication channel. In various embodiments, a mover 120 may include firmware or registers configured to assist with pairing. For example, in various embodiments, a mover 120 is configured to include an identifier or identification of the anchor points 130 that may allow for quicker pairing.

At operation 406, the mover 120 communicates with the anchor point 130. After pairing and opening a communication channel, the mover 120 communicates with anchor point 130. The communication between the mover 120 and the anchor point 130 may occur while the mover 120 is moving along the track 110. In various embodiments, communicating is by one or more operations further described herein.

At operation 408, the mover 120 terminates the pairing. The mover 120 may continue moving along the track 110 and out of communication range with the anchor point 130. As the mover 120 moves away from the anchor point 130A it will continue along the track to the next anchor point 130B. This may start the pairing and communicating with the next anchor point 130B and so on as the mover 120 moves along the track 110.

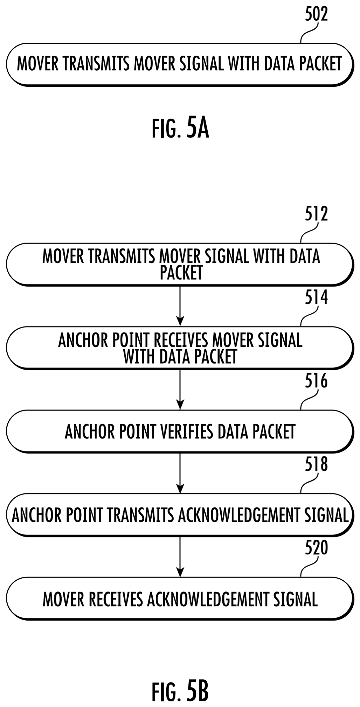

FIGS. 5A-5D illustrate flowcharts of example methods of communicating in accordance with one or more embodiments of the present disclosure. In various embodiments, the manufacturing line system 100 is configured for the mover 120 to use one or more methods of communications. In various embodiments, a mover 120 is configured to utilize a single communication method. Alternatively or additionally, a mover be configured to utilize a first communication method with a first group of anchor points 130 and a second communication method with a second group of anchor points. For example, a first communication method may utilize acknowledgements signals while a second communication method may not utilize acknowledgements signals. In various embodiments, a mover RF transceiver 222 of a mover may have one or more registers.

FIG. 5A illustrates a first flowchart of an exemplary method of communicating in accordance with one or more embodiments of the present disclosure. The first flowchart illustrates the mover 120 transmitting a data packet to an anchor point as the mover 120 moves along the track 110.

At operation 502, the mover 120 transmits a mover signal 240 with a data packet. In various embodiments, the mover 120 may send a single transmission with a data packet. The data packet is, for example, 100 bytes. The data packet may include sensor data or be a signal based on or associated with the sensor data. For example, the data packet includes an alarm or an alert. The data packet is transmitted via the mover signal 240 once a communication channel is open.

FIG. 5B illustrates a second flowchart of an exemplary method of communicating in accordance with one or more embodiments of the present disclosure. In various embodiments, an acknowledgement signal is used by the anchor points 130 to acknowledge a data packet transmitted by a mover signal 240 has been received by the anchor point 130.

In various embodiments, a time period for communication between a mover 120 and an anchor point 130 is limited as the mover 120 may continue its movement without stopping or slowing while communicating with an anchor point 130. The use of an acknowledgement signal may increase that data has been successfully transmitted from a mover 120 and received by the anchor point 130 correctly by not being corrupted. In various embodiments, a time period for transmitting data or the amount of data in a data packet is reduced if an acknowledgement signal is utilized.

At operation 512, the mover 120 transmits a mover signal 240 with a data packet. In various embodiments, the mover 120 may send a mover signal 240 with a data packet. The data packet may include sensor data or be a signal based on or associated with the sensor data. For example, the data packet is an alarm or an alert. The data packet is transmitted via the mover signal 240 once a communication channel is open.

At operation 514, anchor point 130 receives the mover signal 240 with the data packet. The anchor RF transceiver 232 may receive the mover signal 222 over the communication channel.

At operation 516, anchor point 130 verifies the data packet. The anchor point 130 may verify that the data packet received is not corrupted.

At operation 518, the anchor point 130 transmits an acknowledgement signal. An acknowledgement signal is a type of anchor signal 250. The acknowledgement signal may transmit to the mover 120 that the data packet transmitted by the mover 120 was received and/or was received and is not corrupted.

At operation 520, the mover 520 receives the acknowledgement signal.

In various embodiments, a mover receiving an acknowledgement signal is configured to transmit a next mover signal 250 to the next anchor point 130, and the next mover signal is based on or associated with subsequent sensor data. Alternatively, in various embodiments, if an acknowledgement signal is not received then the mover 120 may transmit the same data packet to the next anchor point. Additionally or alternatively, the next data packet transmitted from mover 120 to the next anchor point 130 is based on the sensor data associated with the prior data packet and any sensor data acquired since the last data transmission.

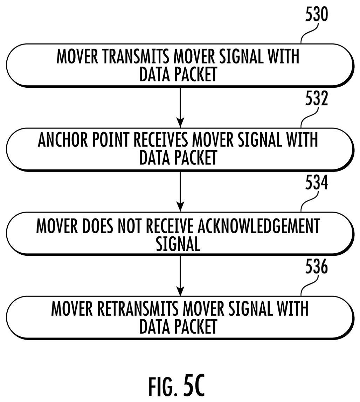

FIG. 5C illustrates a third flowchart of an exemplary method of communicating in accordance with one or more embodiments of the present disclosure. In various embodiments, an acknowledgement signal is used by the anchor points 130 to acknowledge a data packet transmitted by a mover signal 240 has been received by the anchor point 130, but if an acknowledgement signal is not received then the mover 120 may retransmit the mover signal 240 with the data packet.

At operation 530, the mover 120 transmits a mover signal 240 with a data packet. In various embodiments, the mover 120 may send a mover signal 240 with a data packet. The data packet may include sensor data or is a signal based on or associated with the sensor data. For example, the data packet is an alarm or an alert. The data packet is transmitted via the mover signal 240 once a communication channel is open.

At operation 532, anchor point 130 receives the mover signal 240 with the data packet. The anchor RF transceiver 232 may receive the mover signal 222 over the communication channel.

At operation 534, mover 120 does not receive an acknowledge signal. In various embodiments, the mover 120 may wait for a period of time to receive an acknowledgement signal.

At operation 536, the mover 120 retransmits the mover signal with the data packet. If the mover 120 does not receive an acknowledge signal after a period of time, then the mover 120 retransmits the mover signal with the data packet to the anchor point 130.

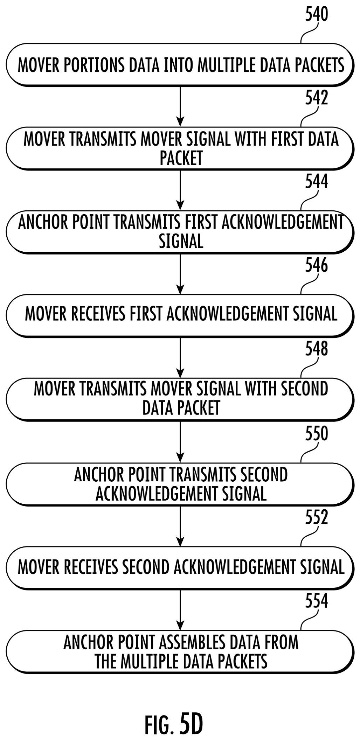

FIG. 5D illustrates a fourth flowchart of an exemplary method of communicating in accordance with one or more embodiments of the present disclosure. In various embodiments, the data is portioned into multiple data packets that are transmitted from the mover 120 to the anchor point 130. Additionally, various embodiments may include the mover 120 receiving an acknowledgement signal is used by the anchor points 130 to acknowledge a data packet transmitted by a mover signal 240 has been received by the anchor point 130.

At operation 540, the mover 120 may portion data into multiple data packets. For example, the data to be transmitted is portioned into a first data packet and a second data packet. For example, a first data packet is 25 bytes and a second data packet is 25 bytes. Between transmission of data packets is a time period to receive an acknowledgement signal.

In various embodiments, the timing of transmission of data packets and receiving of acknowledgement signals is with 3 millisecond windows. In various embodiments, a window may refer to a time period for a transmitting and receiving data. In a first time period of 2.75 milliseconds, the first data packet is transmitted. In the second time period of 0.25 milliseconds, the acknowledgement signal is received by the mover. In the third time period of 2.75 milliseconds, the second data packet is transmitted from the mover 120 to an anchor point 130. In a fourth time period of 0.25 milliseconds, the acknowledgement signal associated with the second data packet is received by the mover 120.

In various embodiments, the timing of transmission of data packets and receiving of acknowledgement signals is with 19.5 millisecond windows. In various embodiments, a window may refer to a time period for a transmitting and receiving data. In a first time period of 19 milliseconds, the first data packet is transmitted. In the second time period of 0.5 milliseconds, the acknowledgement signal is received by the mover. In the third time period of 19.5 milliseconds, the second data packet is transmitted from the mover 120 to an anchor point 130. In a fourth time period of 0.5 milliseconds, the acknowledgement signal associated with the second data packet is received by the mover 120.

In various embodiments, the timing of transmission of data packets and receiving of acknowledgement signals is with 2.5 millisecond windows. In various embodiments, a window may refer to a time period for a transmitting and receiving data may also be referred to as a window. In a first time period of 2.5 milliseconds, the first data packet is transmitted. In the second time period of 2.5 milliseconds, the acknowledgement signal is received by the mover. In the third time period of 2.5 milliseconds, the second data packet is transmitted from the mover 120 to an anchor point 130. In a fourth time period of 2.5 milliseconds, the acknowledgement signal associated with the second data packet is received by the mover 120.

At operation 542, the mover 120 transmits a mover signal 240 with the first data packet. In various embodiments, the mover 120 may send a mover signal 240 with a data packet. The data packet may include sensor data or is a signal based on or associated with the sensor data. For example, the data packet is an alarm or an alert. The data packet is transmitted via the mover signal 240 once a communication channel is open.

At operation 544, the anchor point 130 transmits a first acknowledgement signal. The first acknowledgement signal is associated with the reception and/or verification of the first data packet as not being corrupted.

At operation 546, mover 120 receives the first acknowledgement signal.

At operation 548, mover 120 transmits a mover signal 240 with the second data packet. This second transmission of a mover signal 240 is in response to receiving the first acknowledgement signal.

At operation 550, the anchor point 130 transmits a second acknowledgement signal. The second acknowledgement signal is associated with the reception and/or verification of the second data packet as not being corrupted.

At operation 552, mover 120 receives the second acknowledgement signal.

At operation 554, anchor point 130 may assemble the data from the multiple data packets. In various embodiments, the first data packet and the second data packet are portions of data for the anchor point 130 to be assembled and processed by the anchor point 130.

In various embodiments, the window for completing all transmissions between the mover 120 and an anchor point 130 are based on a speed the mover 120 is configured to move by an anchor point 130. The time periods for transmitting data packets and/or acknowledgement signals are the same duration or are different durations. For example, a time period for transmitting a data packet is greater than, or less than, the time period for transmitting an acknowledgement signal(s).

In various embodiments, a first data packet is configured to include any alarms and/or alerts that have been generated.

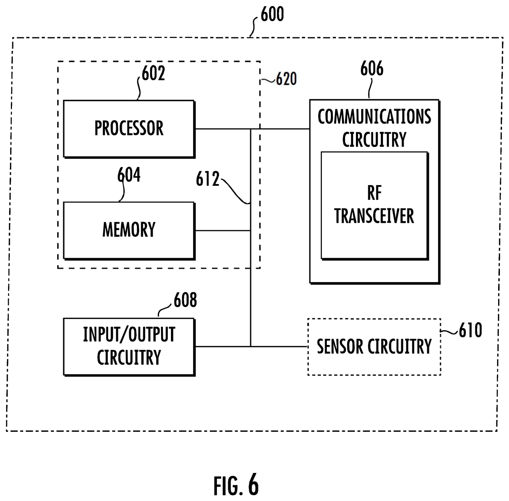

FIG. 6 illustrates an example block diagram of circuitry of a device in accordance with one or more embodiments of the present disclosure. In various embodiments, the device 600 is a mover 120 or an anchor point 130. A device 600 may include a processor 602, memory 604, communications circuitry 606, and input/output circuitry 608, which may all be connected via a bus 612. Various embodiments include a controller that optionally includes at least a processor 602 and a memory 604.

The processor 602, although illustrated as a single block, is comprised of a plurality of components and/or processor circuitry. In various embodiments, the processor 602 is implemented as or as a part of, for example, various components comprising one or a plurality of die, flip chips, microprocessors, processing circuits, and/or various other processing elements. In various embodiments, the processor 602 is part of a controller. The processor 602 includes integrated circuits, such as ASICs, FPGAs, systems-on-a-chip (SoC), or combinations thereof. In various embodiments, the processor 602 is configured to execute operations, instructions, applications, and/or programs stored in the processor 602, memory 604, or otherwise accessible to the processor 602. When executed by the processor 602, these operations, instructions, applications, and/or programs may enable the execution of one or a plurality of the operations and/or functions described herein. Regardless of whether a processor 602 is configured by hardware, firmware/software methods, or a combination thereof, the processor 602 may comprise entities capable of executing operations and/or functions according to the embodiments of the present disclosure when correspondingly configured.

The memory 604 may comprise, for example, a volatile memory, a non-volatile memory, or a certain combination thereof. Although illustrated as a single block, the memory 604 may comprise a plurality of memory components. In various embodiments, the memory 604 may comprise, for example, a cache memory, random access memory, a flash memory, a hard disk, a circuit configured to store information, or a combination thereof. In various embodiments, the memory 604 is configured to write or store data, information, application programs, instructions, etc. so that the processor 602 may execute various operations and/or functions according to the embodiments of the present disclosure. Additionally or alternatively, in at least some embodiments, the memory 604 is configured to store program instructions for execution by the processor 602. The memory 604 may store information in the form of static and/or dynamic information. When the operations and/or functions are executed, the stored information is stored and/or used by the processor 602.

The communication circuitry 606 may be implemented as any apparatus included in a circuit, hardware, computer program product, or a combination thereof, which is configured to receive and/or transmit data from/to another component or apparatus. In various embodiments, the communication circuitry 606 (as with other components discussed herein) are at least partially implemented as part of the processor 602 or otherwise controlled by the processor 602. The communication circuitry 606 may communicate with the processor 602, for example, through a bus 612. Such a bus 612 may connect to the processor 602, and it may also connect to one or more other components. The communication circuitry 606 is configured to receive and/or transmit data that are stored by, for example, the memory 604 by using one or more protocols that can be used for communication between components, apparatuses, and/or systems.

In various embodiments, the communication circuitry 606 may convert, transform, and/or package data into data packets and/or data objects to be transmitted and/or convert, transform, and/or unpackage data received, such as from a first protocol to a second protocol, from a first data type to a second data type, from an analog signal to a digital signal, from a digital signal to an analog signal, or the like. The communication circuitry 606 may additionally, or alternatively, communicate with the memory 604, the input/output circuitry 608, and/or any other component of the processor 602, such as through a bus 612.

The communications circuitry 606 of a mover 120 includes a mover RF transceiver 222.

The communications circuitry 606 of an anchor point 130 includes an anchor RF transceiver 232.

The input/output circuitry 608 may communicate with the processor 602 to receive instructions input by an operator and/or to provide outputs to an operator, such as through one or more other portions of an apparatus or system. The input/output circuity 608 may comprise one or more interfaces to which one or more other portions of an apparatus or system or supporting devices are connected. In various embodiments, aspects of the input/output circuitry 608 are implemented on a device used by the operator to communicate with the processor 602. The input/output circuitry 608 may communicate with the memory 604, the communication circuitry 606, and/or any other component, for example, through a bus 610.

In various embodiments, the input/output circuitry 608 may allow for input from a user and output to a user to configure the processor, memory, or circuitry of a device 600.

It should be readily appreciated that the embodiments of the systems and apparatuses, described herein may be configured in various additional and alternative manners in addition to those expressly described herein.

### Conclusion

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

While this detailed description has set forth some embodiments of the present invention, the appended claims cover other embodiments of the present invention which differ from the described embodiments according to various modifications and improvements.

Within the appended claims, unless the specific term "means for" or "step for" is used within a given claim, it is not intended that the claim be interpreted under 35 U.S.C. § 112, paragraph 6.

## Claims

1. A mover for a manufacturing line comprising:
at least one sensor configured to generate sensor data;
a mover RF transceiver configured to transmit a first mover signal associated with the sensor data to a first anchor RF transceiver of a first anchor point of a plurality of anchor points; and
wherein the mover is configured to move along a track of a manufacturing line.

2. The mover for a manufacturing line of claim 1 further comprising:
a controller configured to control communication between the mover RF transceiver and the at least one sensor.

3. The mover for a manufacturing line of claim 1 or 2, wherein the mover RF transceiver is configured to communicate at a radio frequency between 40 GHz and 75 GHz with wavelengths between 7.5 millimeters and 4 millimeters.

4. The mover for a manufacturing line of any of claims 1 to 3, wherein the first mover signal is configured to be 2 milliseconds or less.

5. The mover for a manufacturing line of any of claims 1 to 4, wherein the first mover signal includes raw data generated by a sensor or includes mover health data or mover load health data generated based on raw data generated by a sensor.

6. The mover for a manufacturing line of any of claims 1 to 5, wherein the mover is further configured to receive, from the first anchor RF transceiver, a first acknowledgement signal transmitted in response to the first mover signal.

7. The mover for a manufacturing line of any of claims 1 to 6, wherein the first mover signal includes an alert signal associated with the sensor data exceeding a first threshold.

8. A manufacturing line system comprising:
a track;
a plurality of anchor points located along the track, wherein each anchor point comprises an anchor RF transceiver;
at least one mover according to any of claims 1 to 7, configured to move along the track of the manufacturing line system, wherein, in each movern the mover RF transceiver is configured to transmit the first mover signal associated with the sensor data to the anchor RF transceiver of a first anchor point of the plurality of anchor points of the manufacturing line system.

9. The manufacturing line system of claim 8, wherein each anchor RF transceiver and each mover RF transceiver are configured to communicate at a radio frequency between 40 GHz and 75 GHz with wavelengths between 7.5 millimeters and 4 millimeters.

10. A method comprising:
moving, by a mover, along a track of a manufacturing line towards a first anchor point, wherein the mover comprises at least one sensor and a mover RF transceiver; and
transmitting, by the mover RF transceiver of the mover to a first anchor RF transceiver of the first anchor point, a first mover signal associated with sensor data generated by the at least one sensor.

11. The method of claim 10, wherein the mover further comprises a controller configured to control communication between the mover RF transceiver and the at least one sensor.

12. The method of claim 10 or 11, wherein the transmitting of the first mover signal is at a radio frequency between 40 GHz and 75 GHz with wavelengths between 7.5 millimeters and 4 millimeters.

13. The method of any of claims 10 to 12, wherein the first mover signal is 2 milliseconds or less.

14. The method of any of claims 10 to 13, wherein the first mover signal includes raw data generated by a sensor or includes mover health data or mover load health data generated based on raw data generated by a sensor.

15. The method of any of claims 10 to 14, further comprising: receiving, by mover RF transceiver and from the first anchor RF transceiver, a first acknowledgement signal transmitted by the first anchor point in response to the first mover signal.
